# EUROPÄISCHE PATENTSCHRIFT

(11) **EP 3 739 097 B1**
(45) Veröffentlichungstag und Bekanntmachung des Hinweises auf die Patenterteilung: **05.06.2024**
(21) Anmeldenummer: 20162016.8
(22) Anmeldetag: 10.03.2020
(51) Int. Cl.: D05B 57/02, D05B 57/32

(54) **VORRICHTUNG ZUR BEFESTIGUNG EINES GREIFERS AUF EINER GREIFERWELLE EINER TEXTILMASCHINE**
DEVICE FOR FIXING A GRIPPER ON A GRIPPER SHAFT OF A TEXTILE MACHINE
DISPOSITIF DE FIXATION D'UNE PINCE SUR UN ARBRE DE PINCES D'UNE MACHINE TEXTILE

(30) Priorität: 17.05.2019 DE 102019113151
(43) Veröffentlichungstag der Anmeldung: 18.11.2020
(73) Patentinhaber: Nähmaschinenfabrik Emil Stutznäcker GmbH & Co. KG, 50858 Köln (DE)
(72) Erfinder: KLAPP, Hartmut, 41564 Kaarst (DE); GROß, Hans-Rochus, 51467 Bergisch-Gladbach (DE)
(74) Vertreter: Brinkmann & Partner

(56) Entgegenhaltungen:
- EP-A1- 2 540 893
- EP-A2- 0 743 387
- WO-A2-2011/001289
- DE-U1- 8 435 840

## Beschreibung

Die Erfindung betrifft eine Vorrichtung zur Befestigung eines Greifers auf einer Greiferwelle einer Textilmaschine, insbesondere einer Nähmaschine, bevorzugt eine Vielnadelnähmaschine, mit einer Halterung und einem Trägerelement für den Greifer, wobei das Trägerelement für den Greifer mit der Halterung über ein Verbindungselement derart verbunden ist, dass das Trägerelement für den Greifer von der Halterung lösbar ist.

Aus der DE 34 00 206 C2 ist ein Verfahren zum Betrieb einer Nähmaschine, insbesondere einer Vielnadelnähmaschine bekannt, die ein oder mehrere Nadeln bzw. einen oder mehrere Greifer als Stichbildewerkzeuge aufweist. Bei diesem Verfahren wird das Nähgut in beliebigen Richtungen innerhalb einer Nähgutebene gefördert. Vorgesehen ist, dass mindestens eines der Halterungen aufweisenden Stichbildewerkzeuge in Abhängigkeit von der durch das geförderte Nähgut verursachten Nagelverbiegung quer zur Bewegungsebene des Greifers derart verschoben wird, dass der Abstand zwischen der Nadel im Bereich der untersten Betriebsstellung und der Bewegungsebene des Greifers im Wesentlichen gleich bleibt. Aus diesem Stand der Technik ist die Anordnung mehrerer Greifer mit Greiferhalterungen auf einer Greiferwelle bekannt.

Eine gattungsgemäße Vorrichtung ist aus der DE 195 18 063 A1 bekannt. Diese Druckschrift offenbart eine Vielnadelnähmaschine mit mindestens einem Nadelbalken und Befestigungsvorrichtungen für die einzelnen Nadeln sowie mit mindestens einer Greiferwelle, an welcher Greiferhalter mit Greifern befestigt sind. Vielnadelnähmaschinen zum Nähen von großflächigem Nähgut, wie beispielsweise Steppdecken, sind mit einer großen Anzahl von Nadeln je Nadelbalken ausgestattet. Wenn mehrere Nadelbalken, insbesondere zwei oder drei für die Nadelreihe gemeinsame Nadelbalken, vorgesehen sind, erhöht sich die Anzahl der Nadeln entsprechend. Zu den einzelnen Nadeln gehören Greifer, die zusammen mit den Nadeln die wesentlichen Teile der Nähorgane darstellen. Die Greifer sind über Greiferhalter an gemeinsamen hin- und heroszillierenden Greiferwellen befestigt.

Bei derartigen Vielnadelnähmaschinen ergibt sich ein erhebliches Problem dadurch, dass das zu nähende Muster an dem großflächigen Nähgut oftmals umgestellt werden muss. Zu diesem Zweck müssen die Nadeln sämtlich oder zumindest ein großer Teil demontiert und wieder an einer anderen Stelle des betreffenden Nadelbalkens erneut montiert werden. Um einen Schrägverlauf oder gar Überkreuzungen der Oberfäden zu vermeiden, müssen diese meist vorher durchtrennt werden. Da die Nadeln bisher meist mittels komplizierter Schraubverbindungen an dem Nadelbalken befestigt sind, sind zur Demontage und zur erneuten Montage der Nadeln an anderen Stellen Werkzeuge erforderlich, meist Spezialwerkzeuge, weil die Befestigungsvorrichtungen schwer zugänglich sind. Das gleiche gilt auch sinngemäß für die Greifer bzw. die Greiferhalter mit ihren Unterfäden. Das Umstellen einer Vielnadelnähmaschine auf ein anderes Nähmuster ist aus den obigen Gründen mit einem erheblichen Arbeits- und Zeitaufwand verbunden. Die DE 195 18 063 A1 schlägt zu diesem Zweck Schnellverriegelungsvorrichtungen sowohl für die Nadeln oder Nadelhalter und/oder die Greiferhalter jedes Greifers vor. Diese Technologie hat sich an sich bewährt und wird auch heute noch eingesetzt. Für die Greifer schlägt dieser Stand der Technik konkret eine Schnellverriegelungsvorrichtung vor, die einen Verriegelungsbügel aufweist, der um einen Schwenkbolzen des Greiferhalters verschwenkbar angelenkt ist und um einen Teil der Greiferwelle herumgreift. Bei dieser Ausführungsform aus dem Stand der Technik ist es von Nachteil, dass für einen festen Sitz eines Greiferhalters auf der Greiferwelle eine hohe Klemmkraft zwischen dem Verriegelungsbügel und der Greiferwelle erforderlich ist. Hieraus resultiert ein Oberflächenverschleiß der Greiferwelle, der durch Instandsetzung ausgeglichen werden muss.

Alternativ ist eine zwischen dem Greifer und dem Greiferhalter handbetätigbare Steckverrieglungsvorrichtung, beispielsweise nach Art eines Bajonettverschlusses vorgesehen.

Der Umbau einer Vielnadelnähmaschine ist jedoch auch damit verbunden, dass die Greifer auch in Relation zu den Nadeln eine bestimmte Einstellung benötigen, da die Greifer während des Nähvorgangs in von den Nadeln unterhalb des Nähguts ausgebildeten Fadenschlingen eingreifen sollen. Dies muss mit entsprechender Genauigkeit erfolgen, so dass auch die Einstellung von Greifer zur Nadel möglichst genau zu erfolgen hat. Bisher erfolgte dies dadurch, dass die Greiferhalter auf der Greiferwelle gelöst und in Richtung auf die Nadel zugeschoben oder von dieser wegbewegt werden, bevor die Greiferhalter erneut auf der Greiferwelle festgesetzt werden. Dieser Vorgang ist sehr aufwendig und auch fehlerbelastet, so dass immer wieder Beschädigungen der Nähorgane festzustellen sind. Darüber hinaus ist das Einstellen der Greiferhalter an der Greiferwelle durch den in diesem

Bereich sehr geringen Platz eine sehr filigrane Arbeit. Da auch die Ausrichtung von Greifer, nachfolgend auch Greifer genannt, zur Nadel nicht unbedingt ohne Hilfsmittel erkennbar ist, werden hierzu kleine Spiegel verwendet, mit denen die Einstellung kontrolliert wird. Dies erfolgt während des Einstellvorgangs, so dass die diesen Vorgang ausführende Person mit einer Hand den Spiegel hält und mit der zweiten Hand den Einstellvorgang ausführt.

Eine Vorrichtung zur Befestigung eines Greifers auf einer Greiferwelle entsprechend der Oberbegriffe der Ansprüche 1 und 6 ist in der EP 2 540 893 A1 offenbart.

Ausgehend von diesem Stand der Technik liegt der Erfindung die **Aufgabe** zugrunde, eine gattungsgemäße Vorrichtung derart weiterzubilden, dass die Befestigung der Greifer an der Greiferwelle möglichst einfach und damit schnell ausführbar ist, wobei ein ausreichend sicherer Halt gewährleistet ist.

Die **Lösung** dieser Aufgabenstellung sieht vor, dass das Verbindungselement als Knebelschraube oder als Verrastung ausgebildet ist, wobei die Knebelschraube, eine Bohrung im Trägerelement drehbar durchgreifend in eine korrespondierende Öffnung in der Halterung, ein Widerlager hintergreifend eingreift oder wobei die Verrastung als formschlüssige Verbindung zwischen dem L-förmigen Trägerelement und der Halterung ausgebildet ist, wobei ein Schenkel eine Aufnahme für den Greifer und ein zweiter Schenkel einen ersten Teil der Verrastung aufweist.

Im Unterschied zum Stand der Technik ist bei der erfindungsgemäßen Vorrichtung gemäß einer ersten Ausführungsform eine Knebelschraube in Kombination mit einem Widerlager vorgesehen. Die Knebelschraube durchgreift eine Bohrung im Trägerelement und ist in diesem frei drehbar gelagert. Das Widerlager ist in der Halterung angeordnet und kann zum Beispiel als ein Vorsprung in einer Bohrung vorgesehen sein, den die Knebelschraube durch eine Drehung hintergreift und somit das Trägerelement an der Halterung festlegt. Die Ausgestaltung mit einer Halterung hat im Übrigen den Vorteil, dass die Halterung in axialer Richtung der Greiferwelle variabel angeordnet und festgesetzt werden kann. Somit kann die Greiferwelle frei von Bohrung zur Aufnahme von Befestigungselementen bleiben. Das Widerlager kann im Übrigen auch bajonettartig ausgebildet sein und mit einem Vorsprung an der Knebelschraube zusammenwirken, wobei es von Vorteil ist, wenn die Ausbildung aus Knebelschraube und Widerlager auch der Verspannung des Trägerelements an der Halterung dient. Ergänzend sind ederelemente vorgesehen die die Verbindung zwischen Trägerelement und Halterung und Spannung halten, um ein unbeabsichtigtes Lösen während des Betriebs der Textilmaschine zu verhindern.

Bei der zweiten Ausführungsform der erfindungsgemäßen Vorrichtung ist eine Verrastung zwischen Trägerelement und Halterung vorgesehen. Diese Verrastung kann beispielsweise ein Art Clipverschluss sein, mit dem das Trägerelement an der Halterung festgelegt wird. Es handelt sich um eine formschlüssige Verbindung, bei es auf einen festen Sitz des Trägerelements auf der Halterung ankommt und die nachfolgend noch beschrieben wird.

Bei beiden erfindungsgemäßen Ausführungsformen kann das Trägerelement mit dem Greifer in einfacher Weise von der Halterung gelöst werden. In der ersten Ausführungsform ist das Trägerelement über die Knebelschraube mit der Halterung verbunden. Die Knebelschraube ist derart ausgebildet, dass mit einer geringen Drehung eine hochfeste Verbindung herstellbar ist. Zu diesem Zweck greift die Knebelschraube in die Halterung ein und ist beispielsweise um 45° verdrehbar, so dass beispielsweise ein Vorsprung am freien Ende der Knebelschraube hinter einen Vorsprung in der Bohrung in der Halterung greift und dort verspannt. Der Vorsprung in der Bohrung kann als Schrägfläche ausgebildet sein, die mit dem Vorsprung an der Knebelschraube zusammenwirkt, so dass der Vorsprung an der Knebelschraube entlang des Vorsprungs in der Bohrung geführt und hierbei die Knebelschraube in die Bohrung in Längsachsenrichtung gezogen wird.

Vorzugsweise weist die Knebelschraube an ihrem freien, d.h. aus dem Trägerelement hervorstehenden Ende einen radial verlaufenden Ansatz auf, der der vereinfachten Verdrehung der Knebelschraube dient. Es ist aber auch möglich, dass die Knebelschraube stirnseitig eine Werkzeugfläche aufweist, die beispielsweise mit einem Schraubendreher, aber auch mit einem Schraubenschlüssel betätigbar sein kann.

Eine alternative Ausgestaltung des Verbindungselementes ist die Verrastung des Trägerelementes mit der Halterung. Hierdurch wird eine formschlüssige Verbindung zwischen dem Trägerelement und der Halterung bereitgestellt. Das Trägerelement wird bei dieser Ausführungsform auf die Halterung aufgeschoben, bis die beiden Bauteile miteinander verrasten. Um das Trägerelement zu lösen wird die Verrastung aufgehoben und das Trägerelement kann von der Halterung entfernt werden.

Um eine einfache Montage der Halterung an der Greiferwelle sicherzustellen ist vorgesehen, dass die Halterung zweiteilig ausgebildet ist, wobei die beiden Teile zum Beispiel über im rechten Winkel zueinander ausgerichtete Schrauben miteinander verbunden werden. Die Halterung weist ferner eine mit der Greiferwelle korrespondierende Öffnung auf. In der Regel ist diese Öffnung kreisförmig ausgebildet. Die Öffnung hat einen gegenüber dem Durchmesser der Greiferwelle geringfügig kleineren Innendurchmesser, so dass über die Schrauben die Halterung an der Greiferwelle verspannt werden kann.

Bei der ersten Ausführungsform der Ausgestaltung des Trägerelementes ist dieses L-förmig ausgebildet und weist zwei Schenkel auf. Ein Schenkel weist eine Aufnahme für den Greifer auf und ein zweiter Schenkel weist eine Stellvorrichtung auf. In der Regel weist der Greifer einen zylinderförmigen Absatz auf, der an eine korrespondierende Öffnung in den Schenkel einsteckbar und über eine Stellschraube fixierbar ist. Die Ausrichtung dieser Fixierschraube ist in der Regel parallel zur Ausrichtung des Verlaufs der Stellvorrichtung. Über die Stellvorrichtung in dem zweiten Schenkel wird dieser zweite Schenkel relativ zur Halterung verstellt, wodurch der erste Schenkel eine Bewegung parallel zur Längsachsenrichtung der Greiferwelle ausführt. Vorzugsweise ist das Trägerelement mit zumindest einem Teilbereich beabstandet zur Halterung angeordnet. Bevorzugt handelt es sich hierbei um den Bereich des Schenkels, der den Greifer trägt und der Halterung gegenüberliegend angeordnet ist. Der Abstand zwischen dem Schenkel des Trägerelementes und der Halterung ermöglicht eine in diesem Bereich reibungsfreie Verstellung.

Um die Montage bzw. Demontage und die Einstellung des Trägerelementes relativ zur Halterung zu vereinfachen, ist nach einem weiteren Merkmal der Erfindung vorgesehen, dass die Bohrung für den Exzenter und die Öffnung für die Knebelschraube in der Halterung parallel verlaufend angeordnet sind. Sowohl der Exzenter als auch die Knebelschraube sind daher beispielsweise an der leichter zugänglichen Vorderseite der Halterung vorgesehen, so dass diese sowohl bei der Montage/Demontage des Trägerelementes als auch bei der Einstellung des Trägerelements relativ zur Halterung gut zugänglich sind. Hierbei ist auch erkennbar, dass sowohl Knebelschraube als auch Exzenter ohne Hilfsmittel sichtbar und damit betätigbar sind.

Der Exzenter weist einen ersten Abschnitt auf, der zentrisch in der Bohrung der Halterung drehbar gelagert ist und dass der Exzenter einen zweiten Abschnitt aufweist, der gegenüber dem ersten Abschnitt exzentrisch versetzt angeordnet ist und in eine Bohrung im Trägerelement eingreift. Demnach ist der Exzenter mit seinem ersten Abschnitt in eine korrespondierend ausgebildete Bohrung in der Halterung eingesetzt. Diese Bohrung ist mit einem Innengewinde ausgebildet, die mit dem Außengewinde des Exzenters zusammenwirkt.

Der erste Abschnitt des Exzenters schließt mit der Oberfläche der Halterung ab, so dass dieser Abschnitt nicht in die beispielsweise als Langloch ausgebildete Öffnung des Trägerelements eingreift. In diese Öffnung greift der zweite Abschnitt des Exzenters ein und zwar derart, dass dieser zweite Abschnitt mit einem Teilabschnitt seiner Außenmantelfläche an der Innenwandung der Öffnung anliegt. Durch eine Verdrehung des Exzenters wird der anliegende Teilabschnitt des zweiten Abschnitts entlang der Innenmantelfläche der Öffnung verstellt, wodurch der zweite Abschnitt des Exzenters eine Verstellkraft auf das Trägerelement ausübt, so dass dieses relativ zur Halterung verstellt wird.

Vorzugsweise weist der Exzenter stirnseitig einen Schlitz zur Aufnahme eines Stellwerkzeuges, beispielsweise eines Schraubendrehers auf. Diese Ausgestaltung ermöglicht eine einfache Verstellung mit einem einfach gestalteten Werkzeug. Alternativ kann der Exzenter an seiner Außenfläche Schlüsselflächen zur Zusammenwirkung mit einem Ring- oder Maulschlüssel aufweisen.

Des Weiteren ist vorgesehen, dass die Knebelschraube an ihrem der Halterung zugewandten Ende einen T-förmigen Hammerkopf aufweist, der einen Vorsprung in der Öffnung hintergreift und dass die Knebelschraube mittels einer Feder, vorzugsweise einer Scheibenfeder gegenüber der Halterung verspannt ist. Bei dieser bevorzugten Ausführungsform kann die Knebelschraube mit dem Hammerkopf in die Bohrung der Halterung eingesteckt und anschließend um einen bestimmten Winkel verdreht werden, wodurch der Hammerkopf den Vorsprung hintergreift und die Knebelschraube in axialer Richtung in die Bohrung gezogen wird. Gleichzeitig wird hierdurch die Feder derart gespannt, dass durch die Federspannung die Knebelschraube fest in der Bohrung und der

Öffnung des Trägerelementes angeordnet und dieses in der Position hält. Anschließend kann nun über die Stellvorrichtung, beispielsweise den Exzenter die Feineinstellung des Trägerelementes und damit des Greifers relativ zur Halterung und damit relativ zur Nadel vorgenommen werden. Eine aufwendige Verstellung der zuvor zutreffend montierten Halterung an der Greiferwelle ist nicht mehr erforderlich. Es ist eine sehr genaue und feinfühlige Justierung der Greiferspitze relativ zur Nadel möglich.

Nach einem weiteren Merkmal der Erfindung ist vorgesehen, dass die Knebelschraube an dem Trägerelement durch einen Ring gegen Herausfallen gesichert ist. Die Knebelschraube durchgreift hierbei die Öffnung im Trägerelement und ist in dieser Öffnung drehbar gelagert. Durch eine Durchmessererweiterung der Knebelschraube wird ein Durchschieben der Knebelschraube durch die Öffnung verhindert. Nach dem Einschieben der Knebelschraube in die Öffnung wird auf der gegenüberliegenden Seite ein Ring aufgesetzt, der in eine Ringnut der Knebelschraube einrastet und über den Außendurchmesser der Knebelschraube in diesem Bereich hervorsteht und somit ein Zurückschieben der Knebelschraube aus der Öffnung des Trägerelements verhindert. Die Knebelschraube ist somit unverlierbar am Trägerelement befestigt, so dass Trägerelement und Knebelschraube zusammen mit dem Greifer ein Bauteil bilden, welches einstückig an der Halterung montierbar oder von der Halterung demontierbar ist. Dies erfolgt problemlos durch ein Lösen der Knebelschraube, so dass diese aus der Bohrung der Halterung herausgezogen werden kann.

Bei der zweiten Ausführungsform der erfindungsgemäßen Vorrichtung ist vorgesehen, dass das Trägerelement L-förmig ausgebildet ist und zwei rechtwinklig zueinander verlaufende Schenkel und ein an einem Schenkel vorgesehenes erstes Rastelement aufweist, welches mit einem zweiten, an der Halterung vorgesehen zweiten Rastelement zusammenwirkt. Hierbei handelt es sich um die Ausführungsform der Erfindung, bei der die als Rastelemente ausgebildeten Verbindungselemente eine Verrastung zwischen Trägerelement und Halterung ausbilden. Die beiden rechtwinklig zueinander verlaufenden Schenkel sind derart angeordnet, dass diese beiden Schenkel an zwei rechtwinklig zueinander verlaufenden Flächen der Halterung anliegen. Das Trägerelement kann somit auf die Halterung, die bereits an der Greiferwelle montiert ist, aufgeschoben und mit dieser verrastet werden, so dass eine formschlüssige und feste Verbindung zwischen Trägerelement und Halterung möglich ist.

Vorzugsweise weist das Trägerelement erste Verbindungselemente auf, die in zweiten, korrespondierend ausgebildeten Verbindungselementen der Halterung angeordnet sind, so dass das Trägerelement formschlüssig mit der Halterung verbunden ist. Hierbei kann es sich beispielsweise um eine Kombination aus einem zylinderförmigen Stift am Trägerelement und einer korrespondierenden Bohrung an der Halterung handeln. Das Trägerelement wird mit diesem Stift in die Bohrung eingeschoben und ist somit in seiner Ausrichtung fixiert. Über das Stellelement kann nun das Trägerelement um diesen Stift verschwenkt werden, um seine Greiferspitze in Richtung der Nadel oder von dieser weg zu bewegen.

Für die vereinfachte Montage und Demontage des Trägerelements an der Halterung hat es sich als vorteilhaft erwiesen, das Trägerelement biegeelastisch auszubilden, so dass insbesondere Teile der beiden Schenkel des Trägerelements unter einer gewissen Vorspannung auf die Halterung aufschiebbar sind und ergänzend zu der formschlüssigen Verbindung auch eine reibschlüssige Verbindung gegeben ist, die das Trägerelement mit der Halterung verbindet. Um das Trägerelement in einfacher Weise von der Halterung zu lösen ist erfindungsgemäß ein Fingeransatz am Trägerelement vorgesehen. Über diesen Fingeransatz können die Rastelemente an den Schenkeln derart bewegt werden, dass die Verrastung zwischen dem Trägerelement und der Halterung aufgehoben wird. Gleichzeitig wird die reibschlüssige Verbindung zwischen Trägerelement und Vorrichtung gelöst, so dass das Trägerelement nachfolgend von der Halterung abgezogen werden kann. Der Fingeransatz ist vorzugsweise als Verlängerung eines Schenkels ausgebildet, so dass eine Betätigung beispielsweise über ein Ergreifen des Trägerelements mit Zeigefinger und Daumen und nachfolgender Kraftbeaufschlagung des Fingeransatzes über den Daumen erfolgen kann.

Weitere Merkmale und Vorteile der Erfindung ergeben sich aus der nachfolgenden Beschreibung der zugehörigen Zeichnung, in der bevorzugte Ausführungsformen der erfindungsgemäßen Vorrichtung dargestellt sind. In der Zeichnung zeigen:
- Fig. 1: eine erste Ausführungsform einer erfindungsgemäßen Vorrichtung in perspektivischer Ansicht;

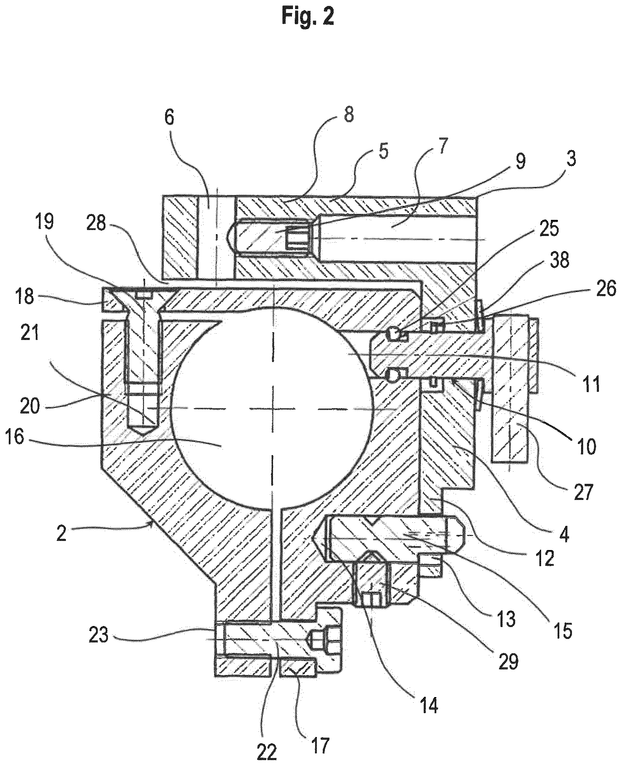

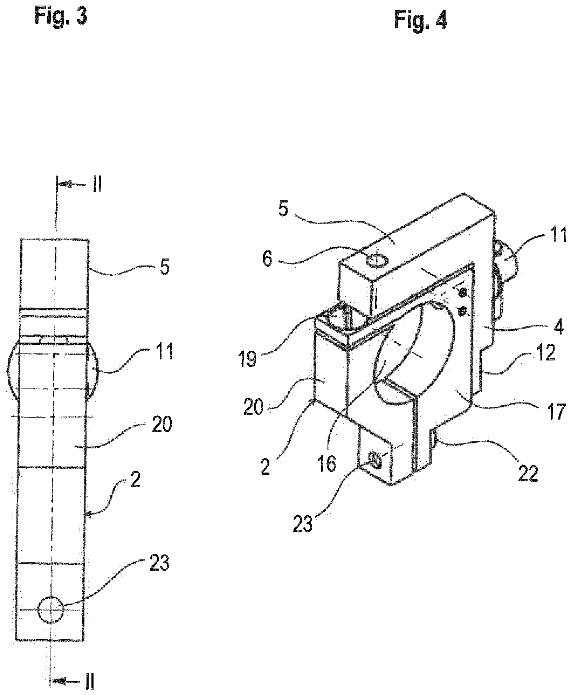

- Fig. 2: die Vorrichtung gemäß Fig. 1 in einer geschnitten dargestellten Seitenansicht entlang der Schnittlinie II-II in Fig. 3;
- Fig. 3: die Vorrichtung gemäß den Figuren 1 und 2 in einer Ansicht;
- Fig. 4: die Vorrichtung gemäß den Figuren 1 bis 3 in einer weiteren perspektivischen Ansicht;
- Fig. 5: eine Halterung als Teil der Vorrichtung gemäß den Figuren 1 bis 4 in einer perspektivischen Ansicht;
- Fig. 6: die Halterung gemäß Fig. 5 in einer geschnitten dargestellten Seitenansicht entlang der Schnittlinie VI-VI in Fig. 8;
- Fig. 7: die Halterung gemäß den Figuren 5 und 6 in einer Draufsicht;
- Fig. 8: die Halterung gemäß den Figuren 6 bis 7 in einer Seitenansicht;
- Fig. 9: ein Trägerelement als Teil der Vorrichtung gemäß den Figuren 1 bis 4 in einer perspektivischen Ansicht;
- Fig. 10: das Trägerelement gemäß Fig. 9 in einer geschnitten dargestellten Seitenansicht entlang der Schnittlinie X-X gemäß Fig. 12;
- Fig. 11: das Trägerelement gemäß den Figuren 9 und 10 in einer Draufsicht;
- Fig. 12: das Trägerelement gemäß den Figuren 9 bis 11 in einer Vorderansicht;
- Fig. 13: eine Knebelschraube in perspektivischer Ansicht;
- Fig. 14: die Knebelschraube gemäß Fig. 13 in einer Seitenansicht;
- Fig. 15: die Knebelschraube gemäß den Figuren 13 und 14 in Frontansicht;
- Fig. 16: die Knebelschraube gemäß Fig. 14 in einer um 90° verstellten Seitenansicht;
- Fig. 17: eine Stellvorrichtung in perspektivischer Ansicht;
- Fig. 18: die Stellvorrichtung gemäß Fig. 17 in einer ersten Seitenansicht;
- Fig. 19: die Stellvorrichtung gemäß Fig. 18 in einer zweiten, um 90° verdrehten Ansicht;
- Fig. 20: die Stellvorrichtung gemäß den Figuren 17 bis 19 in einer Frontansicht;
- Fig. 21: eine zweite Ausführungsform einer erfindungsgemäßen Vorrichtung in Seitenansicht;
- Fig. 22: die Vorrichtung gemäß Fig. 21 in Draufsicht;
- Fig. 23: die Vorrichtung gemäß den Figuren 21 und 22 in einer Unteransicht;
- Fig. 24: die Vorrichtung gemäß den Figuren 21 bis 23 in einer ersten Frontansicht;
- Fig. 25: die Vorrichtung gemäß den Figuren 21 bis 24 in einer zweiten Frontansicht;
- Fig. 26: ein Trägerelement der Vorrichtung gemäß den Figuren 21 bis 25 in perspektivischer Ansicht;
- Fig. 27: eine Halterung für die Vorrichtung gemäß den Figuren 21 bis 25 in perspektivischer Ansicht;
- Fig. 28: die Vorrichtung gemäß den Figuren 21 bis 25 in perspektivischer Ansicht und
- Fig. 29: eine Detailansicht der Verbindung zwischen dem Trägerelement gemäß Fig. 26 und der Halterung gemäß Fig. 27.

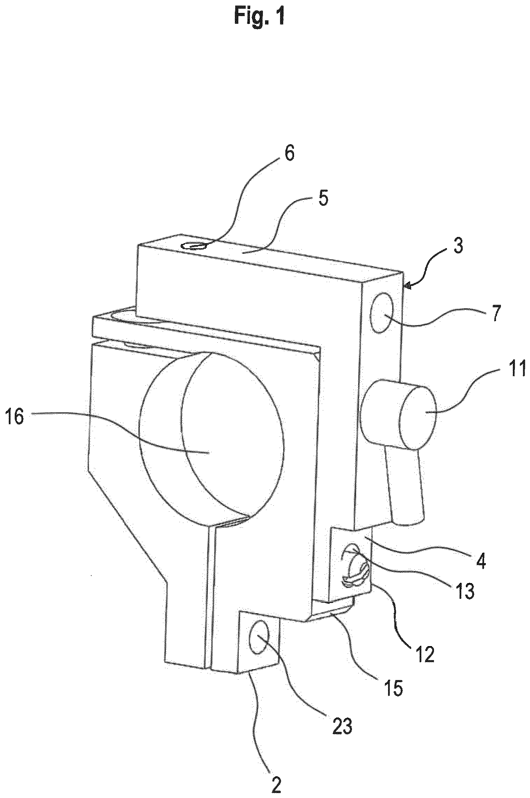

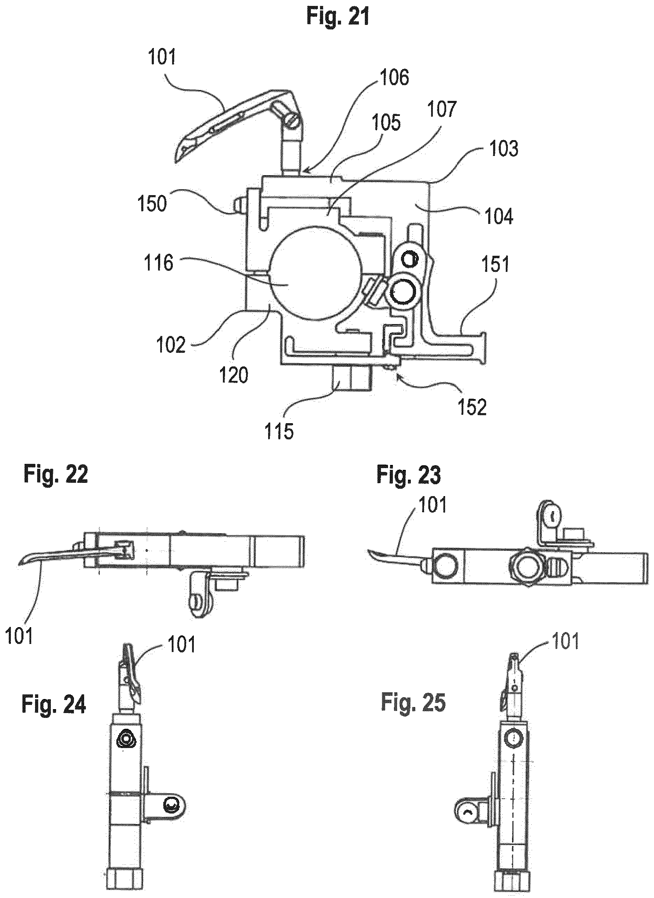

Fig. 1 zeigt eine Vorrichtung zur Befestigung eines Greifers 1 (Figuren 21 bis 25 und 28) in perspektivischer Ansicht. Die Vorrichtung besteht aus einer Halterung 2 und einem daran lösbar befestigten Trägerelement 3. Das Trägerelement 3 ist L-förmig ausgebildet und weist einen ersten Schenkel 4 und einen zweiten Schenkel 5 auf, die rechtwinklig zueinander ausgerichtet sind.

Der zweite Schenkel 5 hat im Bereich eines freien Endes eine Bohrung 6, die der Aufnahme eines zylinderförmigen Abschnitts des Greifers 1 dient. Die Bohrung 6 ist rechtwinklig zur Längserstreckung des Schenkels 5 ausgerichtet. Der erste Schenkel 4 weist eine Bohrung 7 auf, die sich durch den ersten Schenkel 4 in Richtung der Längsachse des zweiten Schenkels 5 erstreckt und im Bereich der Bohrung 6 endet. Im Bereich dieses Endes der Bohrung 7 ist ein Innengewinde 8 ausgebildet, welches mit einem Außengewinde einer Madenschraube 9 zusammenwirkt. Die Madenschraube 9 dient dazu, den zylindrischen Abschnitt des Greifers 1 in der Bohrung 6 festzusetzen, so dass dieser im Trägerelement 3 gehalten ist. Die Greifer 1 wird hierdurch gegen Herausfallen und Verdrehung relativ zum Trägerelement gesichert.

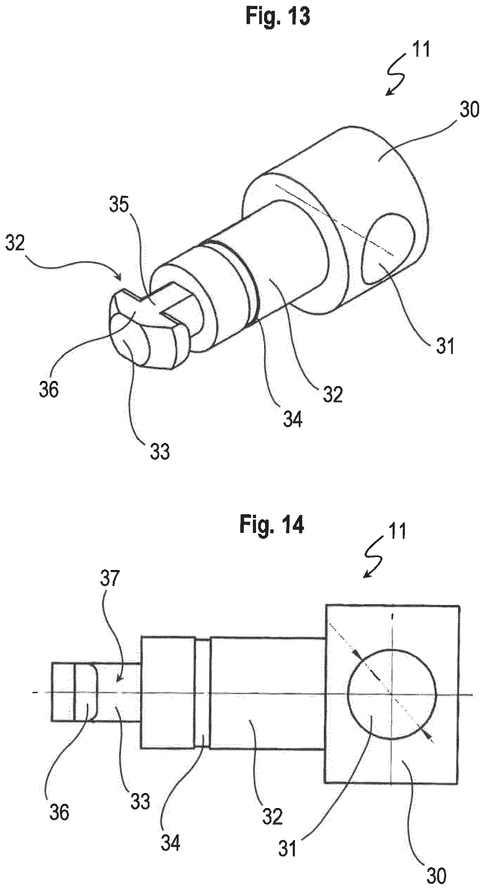

Der erste Schenkel 4 des Trägerelements 3 weist eine weitere Bohrung 10, die der Aufnahme einer Knebelschraube 11 dient, welche nachfolgend noch Bezug nehmend auf die Figuren 13 bis 16 detailliert beschrieben wird.

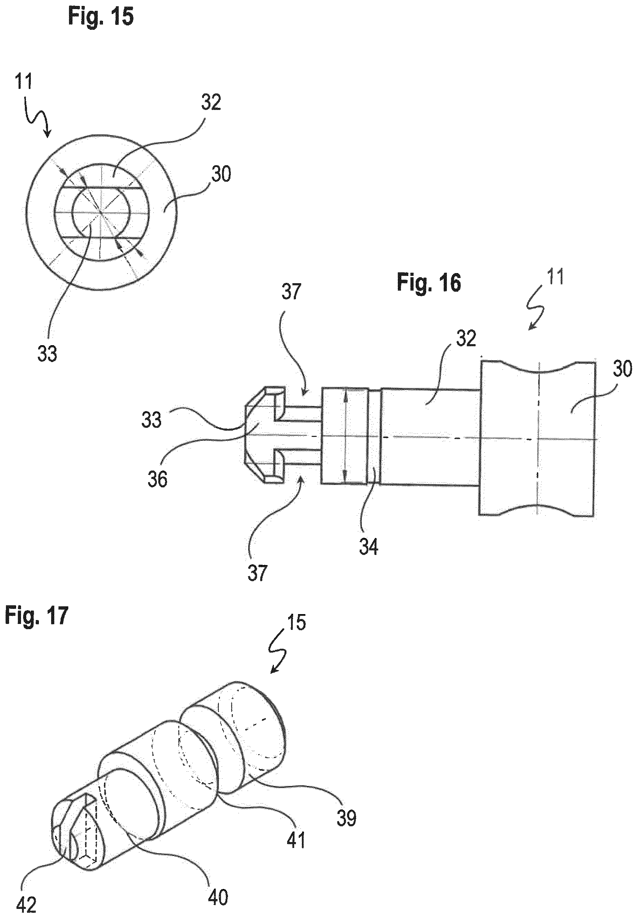

Schließlich weist der erste Schenkel 4 im Bereich eines abgesetzten Abschnitts 12 eine weitere, als Langloch ausgebildete Bohrung 13 auf, die koaxial zu einer Bohrung 14 in der Halterung 2 ausgerichtet ist. In die Bohrungen 13 und 14 ist eine Stellvorrichtung 15 eingesetzt, die nachfolgend noch in Bezug auf die Figuren 17 bis 20 beschrieben wird.

Die Halterung 2 besteht aus zwei Teilen, die unter Ausbildung einer Öffnung 16 zur Aufnahme einer nicht näher dargestellten Greiferwelle miteinander verbunden sind.

Ein erstes Teil 17 der Halterung 2 ist im Wesentlichen L-förmig ausgebildet und weist einen ersten Schenkel 18 auf, der an seinem freien Ende eine Bohrung zur Aufnahme einer Schraube 19 hat, mit der der Schenkel 18 mit einem zweiten Teil 20 der Halterung 2 verschraubt ist. Zu diesem Zweck ist in dem zweiten Teil 20 eine Gewindebohrung 21 mit Innengewinde vorgesehen, die mit der Bohrung 6 im Trägerelement 3 gleich ausgerichtet ist.

Eine zweite Schraube 22 durchgreift eine weitere Bohrung im zweiten Schenkel 5 des ersten Teils 17 des Trägerelements 3, wobei die Schraube 22 in ihrem Verlauf rechtwinklig zum Verlauf der Schraube 19 ausgerichtet ist und mit ihrem freien Ende in eine Bohrung 23 mit Innengewinde im ersten Teil 17 des Trägerelements 3 eingreift.

Der erste Schenkel 18 weist darüber hinaus eine Gewindebohrung 23 parallel zur Bohrung 14 auf, die der Aufnahme des freien Endes der Knebelschraube 11 dient. In die Bohrung 24 ist ein Vorsprung 25 in der Ausgestaltung zweier Zylinderstifte als Widerlager für die Knebelschraube 11 eingesetzt.

Erkennbar ist die Bohrung 10 im Schenkel 4 des Trägerelements 3 mit einem Bereich größeren Querschnitts ausgebildet, in den ein mit der Knebelschraube 11 verbundener Sicherungsring 26 derart eingreift, dass die Knebelschraube 11 gegen ein Herausfallen aus der Bohrung 10 gesichert ist. Die Knebelschraube 11 ist darüber hinaus mit einem radial abstehenden Handansatz 27 ausgebildet, der ein Verdrehen der Knebelschraube 11 erleichtert.

Erkennbar liegt das Trägerelement 3 mit dem Schenkel 4 an einer Stirnfläche der Halterung 2, nämlich des ersten Teils 17 an. Der zweite Schenkel 5 des Trägerelements 3 ist demgegenüber unter Ausbildung eines Spaltes 28 beabstandet zu einer Stirnfläche des ersten Teils 17 der Halterung 2 angeordnet, so dass bei einer Relativbewegung des Trägerelements 3 zur Halterung 2 über die Stellvorrichtung 15 in diesem Bereich keine Reibung zu überwinden ist. Die entsprechenden gegenüberliegend angeordneten Flächen des Schenkels 5 des Trägerelements 3 und des ersten Teils 17 der Halterung 2 können im Übrigen kongruent ausgebildet sein. Beispielsweise können hier kreisbogenabschnittförmige Flächen, d.h. eine konkave Fläche beispielsweise im Bereich des ersten Teils 17 der Halterung 2 und eine konvexe Fläche im Schenkel 5 des Trägerelements 3 vorgesehen sein.

Des Weiteren ist zu erkennen, dass die Stellvorrichtung 15 über eine Sicherungsschraube 29 in der Bohrung 14 gegen Herausfallen gesichert ist.

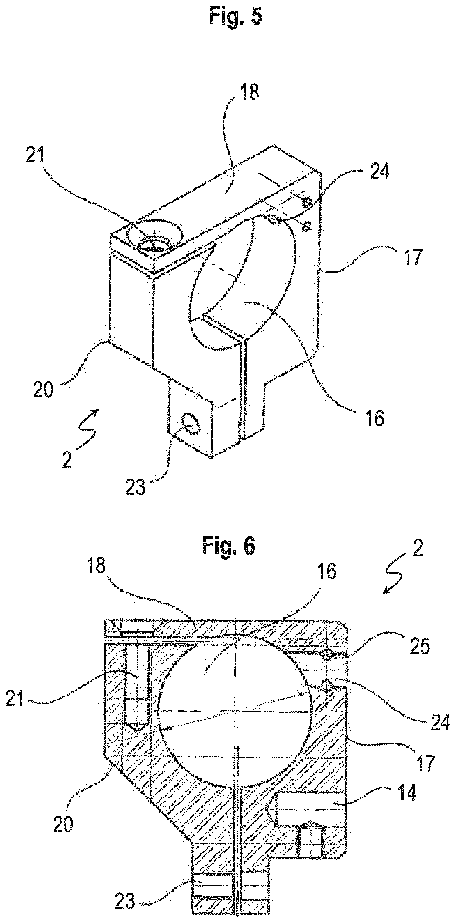

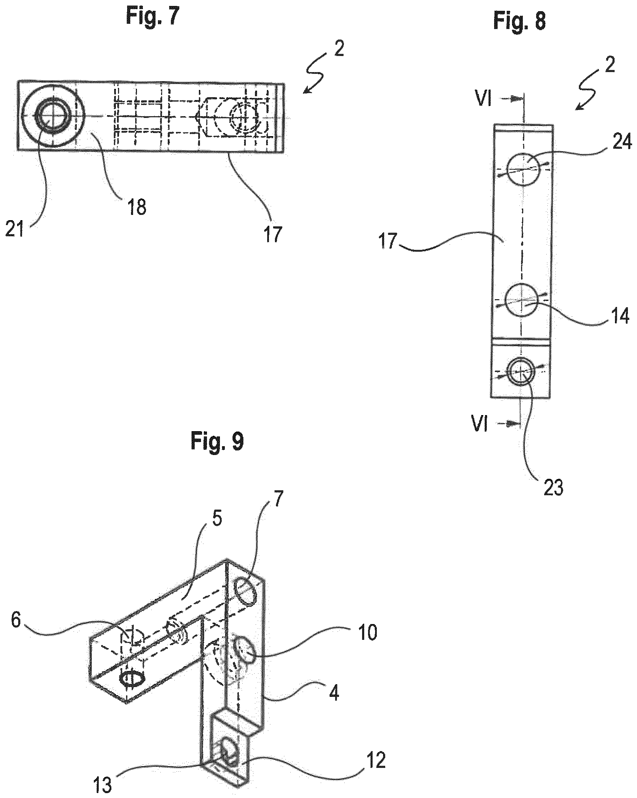

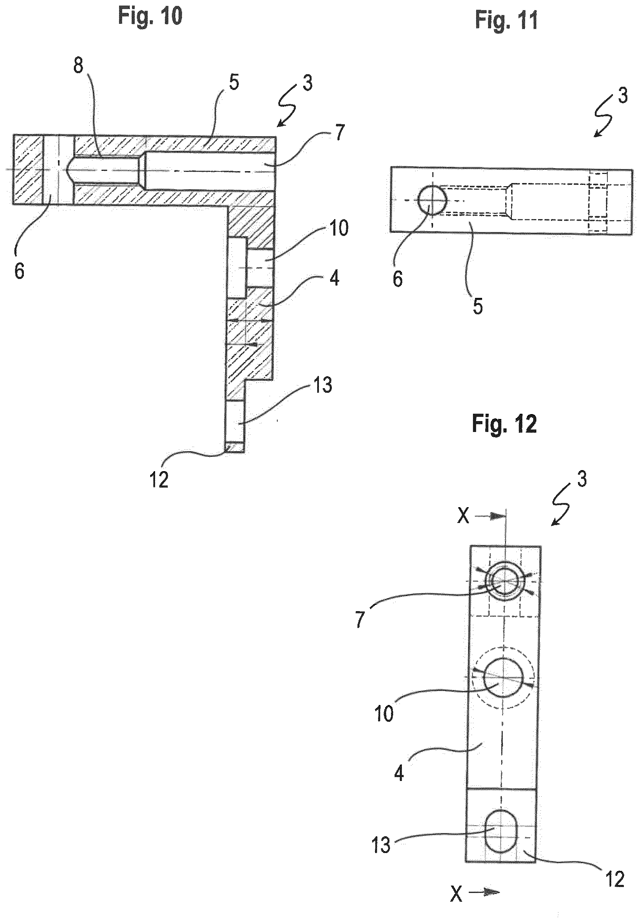

In den Figuren 5 bis 8 ist die Halterung 2 detailliert dargestellt. In den Figuren 9 bis 12 ist das Trägerelement 3 detailliert dargestellt.

Die Figuren 13 bis 14 zeigen die Knebelschraube 11. Erkennbar ist ein Kopf 30 mit einer Axialbohrung 31 zur Aufnahme des nicht dargestellten Handansatzes 27. An den Kopf 30 schließt sich ein zylinderförmiger Schaft 32 an, an dem ein T-förmiger Hammerkopf 33 stirnseitig angeordnet ist. Der Schaft 32 weist eine Ringnut 34 auf, die der Aufnahme des Sicherungsrings 26 dient. Der Sicherungsring 26 ist als Sprengring ausgebildet.

Der stirnseitig am Schaft 32 angeordnete Hammerkopf 33 weist einen Steg 35 auf, der endseitig einen Querriegel 36 trägt, so dass zwischen dem Querriegel 36 und dem stirnseitigen Ende des Schaftes 32 zwei Hinterschneidungen 37 ausgebildet sind, mit denen die Knebelschraube 11 hinter die Zylinderstifte 25 greift, um die Knebelschraube 11 in Axialrichtung in die Bohrung 24 zu ziehen.

Zur sicheren Befestigung der Knebelschraube 11 ist noch eine Tellerfeder 38 vorgesehen, die sich einerseits am Kopf 30 der Knebelschraube 11 und andererseits an der Stirnfläche des Schenkels 4 des Tragelements 3 abstützt und beim Einziehen der Knebelschraube 11 in die Bohrung 24 vorgespannt wird.

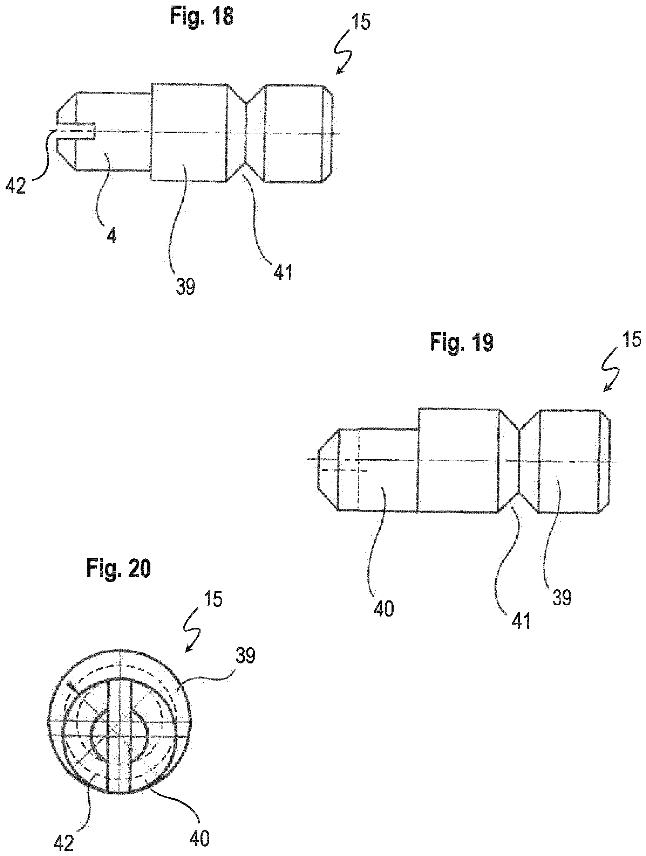

In den Figuren 17 bis 20 ist die Stellvorrichtung 15 detailliert dargestellt. Die Stellvorrichtung 15 besteht aus einem zylinderförmigen ersten Abschnitt 39 und einem zweiten zylinderförmigen Abschnitt 40, der exzentrisch zum ersten Abschnitt 39 an diesem ersten Abschnitt 39 angeordnet ist. Der Abschnitt 40 hat einen gegenüber dem Abschnitt 39 geringeren Durchmesser und ist derart angeordnet, dass ein Teil seiner Außenfläche mit der Außenfläche des Abschnitts 39 übereinstimmt, wie dies insbesondere in den Figuren 19 und 20 zu erkennen ist.

Im ersten Abschnitt 39 ist eine im Querschnitt V-förmige Ringnut 41 ausgebildet, in die die Sicherungsschraube 29 bei montierter Stellvorrichtung 15 eingreift. Durch die Sicherungsschraube 29 wird die Stellvorrichtung 15 in axialer Richtung in der Bohrung 14 festgelegt.

Der zweite Abschnitt 40 weist stirnseitig einen Schlitz 42 auf, der dem Ansatz eines nicht näher dargestellten Werkzeugs, beispielsweise eines Schraubendrehers dient, um die Stellvorrichtung 15 in der Bohrung 14 zu verdrehen.

Durch eine Verdrehung der Stellvorrichtung 15 wird der Abschnitt 40 in der Bohrung 13 des Abschnitts 12 verstellt, so dass über die Außenmantelfläche des Abschnitts 40 der Schenkel 4 um den Schaft 32 der Knebelschraube 11 verdreht wird. Hierdurch erfolgt eine geringfügige Verschwenkung des Schenkels 5 des Trägerelements 3 relativ zur Halterung 2. Dadurch kann ein in die Bohrung 6 eingesetzter und durch die Madenschraube 9 gesicherter Greifer 1 mit seiner Spitze geringfügig zur Nadel oder von dieser weg bewegt werden, um den Greifer 1 in eine optimale Stellung zur Nadel bei der Durchführung des Nähvorgangs zu bringen. Eine derartige optimale Stellung von Nadel und Greifer 1 zueinander stellt sicher, dass zum einen eine Kollision zwischen Greiferspitze und Nadel verhindert wird und dass zum anderen der Nähvorgang mit Nadelfaden und Unterfaden fehlerfrei ausgeführt wird.

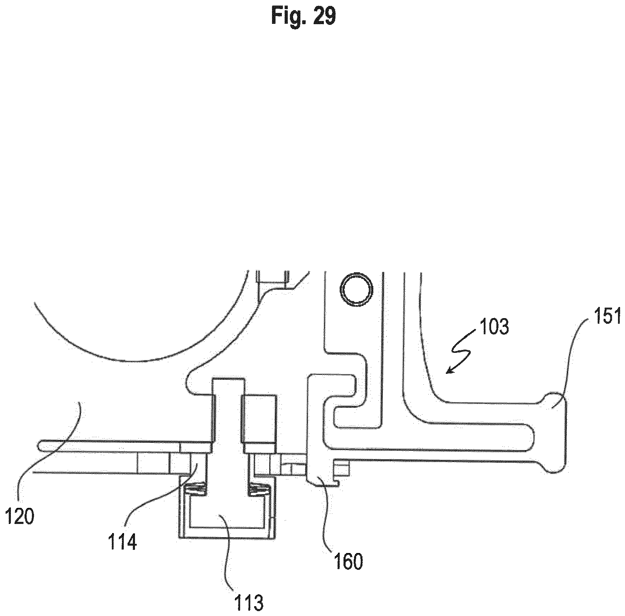

In den Figuren 21 bis 29 ist eine zweite Ausführungsform einer Vorrichtung dargestellt, die ein Trägerelement 103 aufweist. Das Trägerelement 103 hat einen ersten Schenkel 104 und einen zweiten Schenkel 105 auf, die rechtwinklig zueinander ausgerichtet sind.

Der zweite Schenkel 105 hat im Bereich eines freien Endes eine Bohrung 106, die der Aufnahme eines zylinderförmigen Abschnitts des Greifers 101 dient. Die Bohrung 106 ist rechtwinklig zur Längserstreckung des Schenkels 105 ausgerichtet. Des Weiteren weist der zweite Schenkel 105 stirnseitig einen einstückig mit dem Schenkel 105 ausgebildeten und konisch zulaufenden Steckbolzen 150 auf.

Des Weiteren hat der erste Schenkel 104 einen Fingeransatz 151, der sich am freien Ende des ersten Schenkels 104 rechtwinklig zu dessen Längserstreckung erstreckt. Dieser Fingeransatz 151 dient der Betätigung einer Verrastung 152, die nachfolgend noch detailliert beschrieben wird.

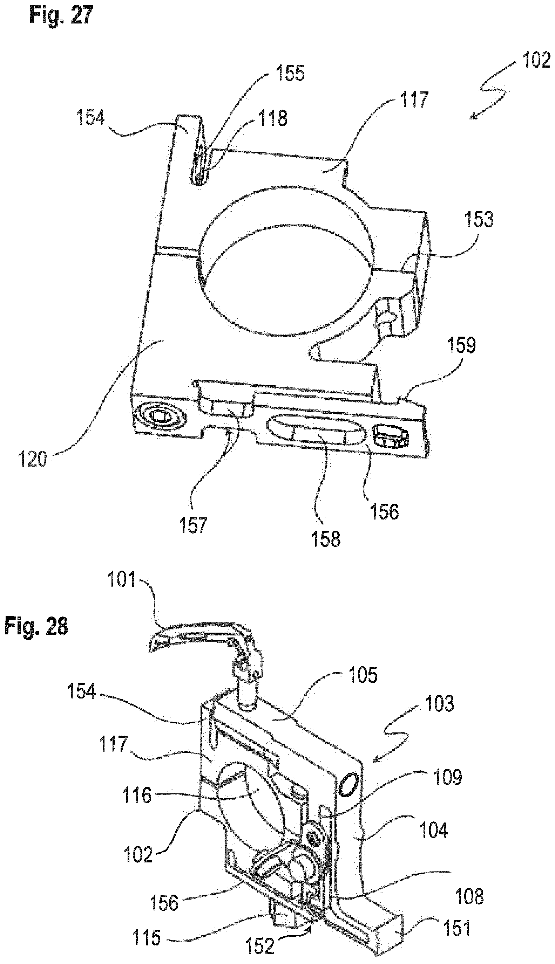

Die Halterung 102 besteht aus zwei Teilen, die unter Ausbildung einer Öffnung 116 zur Aufnahme einer nicht näher dargestellten Greiferwelle miteinander verbunden sind. Ein erstes Teils 117 ist im Wesentlichen U-förmig ausgebildet und mit eine zweiten Teil 120 verbunden, welches ebenfalls im Wesentlichen U-förmig ausgebildet ist. Die Halterung 102 ist in Fig. 27 detailliert dargestellt, wobei in Fig. 27 allerdings die Teilung der Halterung 102 in die Teile 117 und 120 durch Linien 153 angedeutet ist. Das erste Teil 117 weist einen plattenförmigen Abschnitt 154 mit einer Bohrung 155 auf. Die Bohrung 155 dient der Aufnahme des Steckbolzens 150 zur Festlegung des Trägerelements 103 an der Halterung 102. Das zweite Teil 120 weist einen zungenartigen Abschnitt 156 auf, der beschränkt elastisch mit dem Teil 120 verbunden ist. Die Elastizität wird hierbei durch zwei halbkreisförmige Einkerbungen 157 bereitgestellt. Des Weiteren weist der Abschnitt 156 ein sich in seiner Längsrichtung erstreckendes Langloch 158 und zwei Rasthaken 159 als Teil der Verrastung 152 auf. Die beabstandet zueinander angeordneten Rasthaken 159 bilden eine Führung aus, in der ein Rastelement 160 geführt ist. Zwischen den Rasthaken 159 ist bodenseitig ein prismenförmiges Führungselement ausgebildet, welches einerseits das Trägerelement 103 bei der Befestigung an der Halterung 102 führt und andererseits Trägerelement 103 und Halterung 102 in der Endstellung formschlüssig fixiert. Somit ist das Trägerelement 102 hinsichtlich seiner Befestigung an der Halterung 102 durch zwei formschlüssige und prismenförmig ausgebildete Führungen formschlüssig festgelegt. Weiterhin sind im Vergleich zum Stand der Technik hinsichtlich der Halterung 102 keine zusätzlichen Bauteile erforderlich um die vorteilhafte Ausgestaltung zu erzielen.

Das Langloch 158 dient der Aufnahme einer Stellvorrichtung 115, die mit dem Teil 120 oberhalb des Abschnitts 156 verschraubt ist, wobei die Stellvorrichtung 115 einen Exzenter 114 aufweist, der relativ zu einer Schraube 113 verdrehbar gelagert ist, wobei die Schraube 113 in das Teil 120 eingreift und der Exzenter 114 an den Innenwandungen des Langlochs 158 teilweise anliegt, so dass über die Verdrehung des Exzenters 114 der Abschnitt 156 relativ zum oberhalb des Abschnitts 156 angeordneten Teil 120 der Halterung 102 seitlich ausgelenkt werden kann. Zur Unterstützung dieser möglichen Auslenkung sind die Einkerbungen 157 vorgesehen.

Mit dem Rasthaken 159 der Verrastung 152 wirkt das Rastelement 160 zusammen, welches am freien Ende des Schenkels 104 des Trägerelements 103 angeordnet ist.

Das Rastelement 160 befindet sich an einem L-förmig ausgebildeten Ende des Fingeransatzes 151 und über den Fingeransatz ist dieses Ende und damit das Rastelement 160 relativ zur Verrastung 152 bewegbar, um das Trägerelement 103 von der Halterung 102 zu lösen.

Das Trägerelement 103 mit dem Greifer 101, der drehfest in der Bohrung 106 festgesetzt ist, wird durch den Steckbolzen 150 einerseits und durch die Verrastung 152 andererseits fest mit der Halterung 102 verbunden.

Über die Stellvorrichtung 115, nämlich den Exzenter 114 kann der Abschnitt 156 nach links bzw. rechts und damit annähernd in Richtung der Längsachse der Bohrung 106 in geringen Grenzen verstellt werden. Durch diese Verstellung wird auch das Rastelement 160 in der Verrastung 152 entsprechend bewegt, woraus sich eine geringfügige Verstellung des Trägerelements 103 relativ zur Halterung 102 ergibt. Diese Relativbewegung des Trägerelements 103 zur Halterung 102 führt dazu, dass die Spitze des Greifers 101 in Richtung auf eine nicht näher dargestellte Nadel zu oder von dieser weg bewegt wird, so dass über die Stellvorrichtung 115 eine Feinjustierung des Greifers 101 zur Nadel möglich ist, ohne dass zuvor die Halterung 102 auf der nicht näher dargestellten Greiferwelle gelöst und bewegt werden muss.

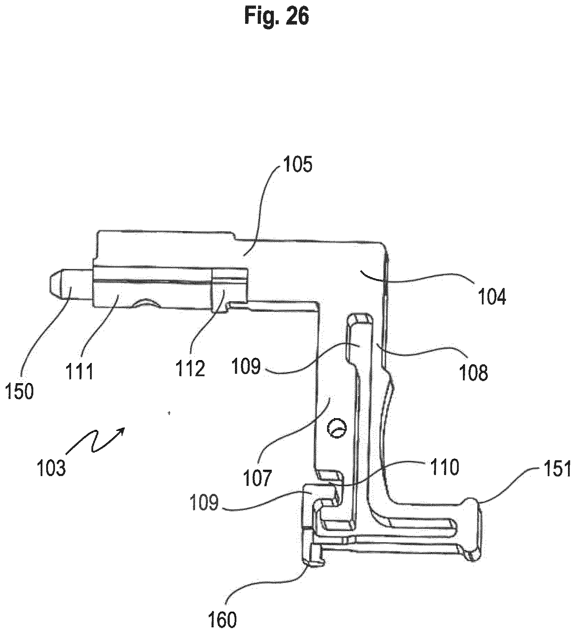

Aus Fig. 26 ist die genaue Konstruktion des Trägerelements 103 erkennbar. Insbesondere ist erkennbar, dass der Schenkel 104 über annähernd seine gesamte Länge in zwei Bereiche 107 und 108 unterteilt ist. Zwischen den Bereichen 107 und 108 ist eine Öffnung ausgebildet. Das freie Ende des Bereichs 108 geht in den Fingeransatz 151 über, der an seinem freien Ende das Rastelement 160 aufweist und mit einem Vorsprung 109 in eine korrespondierende Ausnehmung 110 am freien Ende des Bereichs 107 eingreift, gleichzeitig in dieser Ausnehmung 110 in Längsachsenrichtung des Bereichs 107 begrenzt bewegbar ist, so dass über den Fingeransatz 151 der Vorsprung 109 in Richtung auf den Schenkel 104 bewegbar ist, um das Rastelement 160 aus der Verrastung 152 zu lösen, so dass nachfolgend das Trägerelement 103 von der Halterung 102 entfernt werden kann.

Hierdurch ist sichergestellt, dass das Trägerelement 103 mit dem Greifer 101 in einfacher Weise an der Halterung 102 befestigt bzw. von dieser gelöst werden kann, um beispielsweise die Textilmaschine in ihrer Konfiguration hinsichtlich der Anzahl der Greifer 101 umzurüsten, ohne dass es hierzu beispielsweise einem Lösen von Schraubverbindungen bedarf. Durch den Steckbolzen 150, dessen Außendurchmesser auf den Innendurchmesser der Bohrung 155 abgestimmt ist, wird das Trägerelement 103 in seiner Befestigung an der Halterung 102 festgelegt. Darüber hinaus ist auch die Verrastung 152 derart ausgebildet, dass das Rastelement 160 formschlüssig mit den Rasthaken 159 zusammenwirkt, so dass eine Verstellung des Greifers 101 relativ zu der nicht näher dargestellten Nadel nur in beschränktem Maße über die Stellvorrichtung 115 erfolgen kann. Die Stellvorrichtung 115 kann zu diesem Zweck Schlüsselflächen aufweisen, die den Ansatz eines üblichen Maul- oder Ringschlüssels ermöglicht, so dass eine einfache Verstellung der Stellvorrichtung 115 möglich ist.

Ergänzend weist das Trägerelement 103 Führungsflächen 111, 112 auf, die mit korrespondierenden Führungen 118 zusammenwirken. Diese Führungen 118 befinden sich im Bereich der oberen Stirnfläche der Halterung 102 und es kann sich hierbei um im Querschnitt V-förmig ausgebildete Ausnehmungen handeln. Entsprechende Führungen können auch im Bereich des Rastelements 160 bzw. der Rasthakens 159 vorgesehen sein, so dass über eine formschlüssige Verbindung relative Bewegungen der miteinander verbundenen Bauteile verhindert werden und hierzu keine großen Spannkräfte, wie im Stand der Technik erforderlich sind. Auch im Bereich zwischen dem Rastelement 160 und den Rasthaken 159 kann eine prismenförmige Formgebung, beispielsweise mit V-förmigen Querschnitt vorgesehen sein. Die Führung 118 und die prismenförmige Formgebung sind hierbei mit aufeinander zu ausgerichtete Öffnungen ausgebildet. In diesen Bereich werden die Flächen bei der Montage bzw. Demontage daher nur mit geringen Kräften belastet, so dass auch der Verschleiß dieser Flächen minimiert und praktisch nicht feststellbar ist.

Mit der voranstehend beschriebenen Ausführungsform ist ein werkzeugloser Greiferwechsel möglich. Gleichzeitig ist eine Feineinstellung des Greifers 101 relativ zur Nadel möglich.

Die voranstehend beschriebene Erfindung ist nicht auf die Ausführungsbeispiele beschränkt, sondern wird durch die nachfolgenden Ansprüche definiert. Zusätzlich kann eine Ablage für nicht verwendete oder zusätzliche Greifer vorgesehen sein, so dass diese bei einer Umrüstung der Nähmaschine schnell vor Ort verfügbar sind. Die Ablage kann schienenförmig ausgebildet sein und sich über eine wesentliche Länger der Nähmaschine im Bereich der Nähorgane, insbesondere im Bereich der Greiferwelle erstrecken.

### Bezugszeichen

- 1: Greifer
- 2: Halterung
- 3: Trägerelement
- 4: Schenkel
- 5: Schenkel
- 6: Bohrung
- 7: Bohrung
- 8: Innengewinde
- 9: Madenschraube
- 10: Bohrung
- 11: Knebelschraube
- 12: Abschnitt
- 13: Langloch
- 14: Bohrung
- 15: Stellvorrichtung
- 16: Öffnung
- 17: erster Teil
- 18: Schenkel
- 19: Schraube
- 20: zweiter Teil
- 21: Gewindebohrung
- 22: Schraube
- 23: Gewindebohrung
- 24: Bohrung
- 25: Zylinderstifte (Vorsprung)
- 26: Sicherungsring
- 27: Handansatz
- 28: Spalt
- 29: Sicherungsschraube
- 30: Kopf
- 31: Axialbohrung
- 32: Schaft
- 33: Hammerkopf
- 34: Ringnut
- 35: Steg
- 36: Querriegel
- 37: Hinterschneidung
- 38: Tellerfeder
- 39: erster Abschnitt
- 40: zweiter Abschnitt
- 41: Ringnut
- 42: Schlitz

- 101: Greifer
- 102: Halterung
- 103: Trägerelement
- 104: Schenkel
- 105: Schenkel
- 106: Bohrung
- 107: Bereich
- 108: Bereich
- 109: Vorsprung
- 110: Ausnehmung
- 111: Führungsfläche
- 112: Führungsfläche
- 113: Schraube
- 114: Exzenter
- 115: Stellvorrichtung
- 116: Öffnung
- 117: Teil
- 118: Führung
- 120: Teil

- 150: Steckbolzen
- 151: Fingeransatz
- 152: Verrastung
- 153: Linie
- 154: Ausschnitt
- 155: Bohrung
- 156: Abschnitt
- 157: Einkerbung
- 158: Langloch
- 159: Rasthaken
- 160: Rastelement

## Patentansprüche

1. Vorrichtung zur Befestigung eines Greifers (1) auf einer Greiferwelle einer Textilmaschine, mit einem Trägerelement (3) für den Greifer (1), wobei das Trägerelement (3) für den Greifer (1) mit einer, auf der Greiferwelle zu montierenden, Halterung (2) über ein Verbindungselement derart verbunden ist, dass das Trägerelement (3) für den Greifer (1) von der Halterung (2) lösbar ist, **dadurch gekennzeichnet dass** das Verbindungselement als Knebelschraube (11) ausgebildet ist, wobei die Knebelschraube (11) eine Bohrung im Trägerelement (3) drehbar durchgreifend in eine korrespondierende Öffnung in der Halterung (2), ein Widerlager hintergreifend eingreift und dass die Verbindung zwischen Trägerelement (3) und Halterung (2) mittels Federelement unter Spannung gehalten wird.

2. Vorrichtung nach Anspruch 1, **dadurch gekennzeichnet, dass** die Halterung (2) zweiteilig ausgebildet ist und eine Aufnahme (16) für die Greiferwelle aufweist.

3. Vorrichtung nach einem der Ansprüche 1 oder 2, **dadurch gekennzeichnet, dass** das Trägerelement (3) L-förmig ausgebildet ist und zwei Schenkel (4, 5) aufweist, wobei ein Schenkel (5) eine Aufnahme für den Greifer (1) und ein zweiter Schenkel (4) die Knebelschraube (11) aufweist.

4. Vorrichtung nach einem der Ansprüche 1 bis 3, **dadurch gekennzeichnet, dass** die Knebelschraube (11) an ihrem der Halterung (2) zugewandten Ende einen T-förmigen Hammerkopf (33) aufweist, der einen Vorsprung (25) in einer Öffnung (24) in der Halterung (2) hintergreift und dass die Knebelschraube (11) mittels einer Feder gegenüber der Halterung (2) oder der Greiferwelle verspannt ist.

5. Vorrichtung nach einem der Ansprüche 1 bis 4, **dadurch gekennzeichnet, dass** die Knebelschraube (11) an dem Trägerelement (3) durch einen Sicherungsring (26) gegen Herausfallen gesichert ist.

6. Vorrichtung zur Befestigung eines Greifers (101) auf einer Greiferwelle einer Textilmaschine, mit einem Trägerelement (103) für den Greifer (101), wobei das Trägerelement (103) für den Greifer (101) mit einer, auf der Greiferwelle zu montierenden, Halterung (102) über ein Verbindungselement derart verbunden ist, dass das Trägerelement (103) für den Greifer (101) von der Halterung (102) lösbar ist, **dadurch gekennzeichnet dass** das Verbindungselement als Verrastung (152) ausgebildet ist, wobei die Verrastung (152) als formschlüssige Verbindung zwischen dem Trägerelement (103) und der Halterung (102) ausgebildet ist und wobei das Trägerelement (103) L-förmig ausgebildet ist und zwei Schenkel (104, 105) aufweist, wobei ein Schenkel (105) eine Aufnahme für den Greifer (101) und ein zweiter Schenkel (104) einen ersten Teil der Verrastung (152) aufweist.

7. Vorrichtung nach Anspruch 6, **dadurch gekennzeichnet, dass** die Halterung (102) zweiteilig ausgebildet ist und eine Aufnahme (116) für die Greiferwelle aufweist.

8. Vorrichtung nach einem der Ansprüche 6 oder 7 **dadurch gekennzeichnet, dass** das Trägerelement (103) zwei rechtwinklig zueinander verlaufende Schenkel (104, 105) und ein an einem Schenkel (104) angeordnetes Ratselement (160) der Verrastung (152) aufweist.

9. Vorrichtung nach einem der Ansprüche 6 bis 8, **dadurch gekennzeichnet, dass** das Trägerelement (103) erste Verbindungselemente aufweist, die in zweiten, korrespondierend ausgebildeten Verbindungselementen der Halterung (102) angeordnet sind, so dass das Trägerelement (103) formschlüssig mit der Halterung (102) verbunden ist.

10. Vorrichtung nach einem der Ansprüche 6 bis 9, **dadurch gekennzeichnet, dass** das Trägerelement (103) biegeelastisch ausgebildet ist.

11. Vorrichtung nach einem der Ansprüche 6 bis 10, **dadurch gekennzeichnet, dass** das Trägerelement (103) einen Fingeransatz (151) zur Betätigung der Verrastung aufweist.

## Claims

1. Device for fixing a gripper (1) on a gripper shaft of a textile machine, the device comprising a support element (3) for the gripper (1), wherein the support element (3) for the gripper (1) is connected to a holder (2) to be mounted on the gripper shaft via a connecting element in such a way that the support element (3) for the gripper (1) can be detached from the holder (2), **characterized in that** the connecting element is designed as a tommy screw (11), wherein the tommy screw (11) engages in a corresponding opening in the holder (2) while rotatably penetrating through a bore in the support element (3) and engaging behind an abutment, and **in that** the connection between the support element (3) and the holder (2) is kept under tension by means of a spring element.

2. Device according to claim 1, **characterized in that** the holder (2) is a two-part design and includes a seat (16) for the gripper shaft.

3. Device according to any one of claims 1 or 2, **characterized in that** the support element (3) is L-shaped and has two legs (4, 5), wherein one leg (5) has a seat for the gripper (1) and a second leg (4) has the tommy screw (11).

4. Device according to any one of claims 1 to 3, **characterized in that** the tommy screw (11) has a T-shaped hammerhead (33) on its end facing the holder (2), the hammerhead engaging behind a protrusion (25) in an opening (24) in the holder (2) and **in that** the tommy screw (11) is braced against the holder (2) or the gripper shaft by means of a spring.

5. Device according to any one of claims 1 to 4, **characterized in that** the tommy screw (11) on the support element (3) is secured against falling out by a retaining ring (26).

6. Device for fixing a gripper (101) on a gripper shaft of a textile machine, the device comprising a support element (103) for the gripper (101), wherein the support element (103) for the gripper (101) is connected to a holder (102) to be mounted on the gripper shaft via a connecting element in such a way that the support element (103) for the gripper (101) can be detached from the holder (102), **characterized in that** the connecting element is designed as a latching (152), wherein the latching (152) is designed as a positive connection between the support element (103) and the holder (102) and wherein the support element (103) is L-shaped and has two legs (104, 105), one leg (105) comprising a seat for the gripper (101) and a second leg (104) comprising a first part of the latching (152).

7. Device according to claim 6, **characterized in that** the holder (102) is a two-part design and includes a seat (116) for the gripper shaft.

8. Device according to any one of claims 6 or 7, **characterized in that** the support element (103) has two legs (104, 105) extending at right angles to each other and has a latching element (160) of the latching (152) arranged on one leg (104).

9. Device according to any one of claims 6 to 8, **characterized in that** the support element (103) includes first connecting elements which are arranged in correspondingly formed second connecting elements of the holder (120), so that the support element (103) is positively connected to the holder (102).

10. Device according to any one of claims 6 to 9, **characterized in that** the support element (103) is designed to be elastically bendable.

11. Device according to any one of claims 6 to 10, **characterized in that** the support element (103) has a finger attachment (151) for actuating the latching.

## Revendications

1. Dispositif de fixation d'une pince (1) sur un arbre de pinces d'une machine textile, le dispositif comprenant un élément de support (3) pour la pince (1), dans lequel l'élément de support (3) pour la pince (1) est relié à un dispositif de support (2) à monter sur l'arbre de pince par l'intermédiaire d'un élément de liaison de telle sorte que l'élément de support (3) pour la pince (1) peut être détaché du dispositif de support (2), **caractérisé en ce que** l'élément de liaison est conçu comme une vis à bascule (11), la vis à bascule (11) s'engageant dans une ouverture correspondante du dispositif de support (2) tout en pénétrant de manière rotative à travers un alésage dans l'élément de support (3) et en s'engageant derrière une butée, et **en ce que** la liaison entre l'élément de support (3) et le dispositif de support (2) est maintenue sous tension à l'aide d'un élément de ressort.

2. Dispositif selon la revendication 1, **caractérisé en ce que** le dispositif de support (2) est en deux parties et comprend un logement (16) pour l'arbre de pinces.

3. Dispositif selon l'une quelconque des revendications 1 ou 2, **caractérisé en ce que** l'élément de support (3) est en forme de L et présente deux jambes (4, 5), une jambe (5) comportant un logement pour la pince (1) et une deuxième jambe (4) comportant la vis à bascule (11).

4. Dispositif selon l'une quelconque des revendications 1 à 3, **caractérisé en ce que** la vis à bascule (11) présente une tête de marteau en forme de T (33) sur son extrémité tournée vers le dispositif de support (2), la tête de marteau s'engageant derrière une saillie (25) dans une ouverture (24) du dispositif de support (2) et **en ce que** la vis à bascule (11) est serrée contre le dispositif de support (2) ou l'arbre de pince au moyen d'un ressort.

5. Dispositif selon l'une quelconque des revendications 1 à 4, **caractérisé en ce que** la vis à bascule (11) sur l'élément de support (3) est sécurisée contre la chute par un anneau de retenue (26).

6. Dispositif de fixation d'une pince (101) sur un arbre de pince d'une machine textile, le dispositif comprenant un élément de support (103) pour la pince (101), dans lequel l'élément de support (103) pour la pince (101) est relié à un dispositif de support (102) à monter sur l'arbre de pince par l'intermédiaire d'un élément de liaison de telle sorte que l'élément de support (103) pour la pince (101) peut être détaché du dispositif de support (102), **caractérisé en ce que** l'élément de liaison est conçu comme un verrouillage (152), le verrouillage (152) étant conçu comme une liaison positive entre l'élément de support (103) et le dispositif de support (102) et l'élément de support (103) étant en forme de L et présentant deux jambes (104, 105), une jambe (105) comportant un logement pour la pince (101) et une deuxième jambe (104) comportant une première partie du verrouillage (152).

7. Dispositif selon la revendication 6, **caractérisé en ce que** le dispositif de support (102) est en deux parties et comprend un logement (116) pour l'arbre de la pince.

8. Dispositif selon l'une quelconque des revendications 6 ou 7, **caractérisé en ce que** l'élément de support (103) présente deux jambes (104, 105) s'étendant à angle droit l'une par rapport à l'autre et présente un élément de verrouillage (160) du verrouillage (152) disposé sur une jambe (104).

9. Dispositif selon l'une quelconque des revendications 6 à 8, **caractérisé en ce que** l'élément de support (103) comprend des premiers éléments de liaison qui sont disposés dans des seconds éléments de liaison du dispositif de support (102) formés de manière correspondante, de sorte que l'élément de support (103) est relié positivement au dispositif de support (102).

10. Dispositif selon l'une quelconque des revendications 6 à 9, **caractérisé en ce que** l'élément de support (103) est conçu pour être élastiquement pliable.

11. Dispositif selon l'une quelconque des revendications 6 à 10, **caractérisé en ce que** l'élément de support (103) présente une saillie de doigt (151) permettant d'actionner le verrouillage.
